# EUROPEAN PATENT APPLICATION

(11) **EP 3 778 258 A1**
(43) Date of publication of application: **17.02.2021**
(21) Application number: 19782096.2
(22) Date of filing: 02.04.2019
(51) Int. Cl.: B44C 1/24, B23K 26/36, B29C 33/38, B29C 59/02, B29C 59/04

(54) **METHOD FOR MANUFACTURING DECORATIVE MATERIAL**

(30) Priority: 02.04.2018 JP 2018070955
(71) Applicant: Dai Nippon Printing Co., Ltd., Shinjuku-ku, Tokyo 162-8001 (JP)
(72) Inventor: SHIBANO, Shiho, Tokyo 162-8001 (JP); SUGA, Kazuhiro, Tokyo 162-8001 (JP); OKAMOTO, Masaru, Tokyo 162-8001 (JP); SUKEGAWA, Yoshio, Tokyo 162-8001 (JP); IWATA, Shinji, Tokyo 162-8001 (JP)
(74) Representative: Müller-Boré & Partner Patentanwälte PartG mbB
(86) International application number: PCT/JP2019/014699
(87) International publication number: WO 2019/194202

(57) **Abstract**

A method for manufacturing a decorative material, the method including a step of creating density distribution data having a density value D(x, y) for each two-dimensional position (x, y); a step of converting the density value D(x, y) into a height H(x, y) corresponding to how large the concentration value is; a step of converting the height H(x, y) into a depth F(x, y) that corresponds to the height; a step of forming irregularities on a surface of a material to be a die based on the depth F(x, y) to form the die; and a step of shaping a resin with respect to the irregularities of the die to form irregularities on a surface of the resin.

## Description

### FIELD

The present invention relates to methods for manufacturing a decorative material.

### BACKGROUND

Design expressions in decorative materials have been varied, and various patterns of decorative materials have been provided. For example, Patent Literature 1 discloses a decorative material comprising a pattern of a so-called stone like texture which imitates and expresses a surface of a stone material.

### Citation List

### Patent Literature

Patent Literature 1: JP H8-52849 A

### SUMMARY

### Technical Problem

There has been a demand for decorative materials having different appearances and touches from what they are, because nowadays people have different tastes and in some cases, a realistic design expression is required.

Accordingly, an object of the present invention is to provide a method for manufacturing a decorative material with which a texture different from what it was can be obtained.

### Solution to Problem

Hereinafter, the present invention will be described.

One aspect of the present invention is a method for manufacturing a decorative material provided with an irregular pattern formed on its surface, the method including: a step of creating density distribution data having a density value D (x, y) for each two-dimensional position (x, y); a step of converting the density value D (x, y) into a height H (x, y) corresponding to how large the density value is; a step of converting the height H (x, y) into a depth F (x, y) that corresponds to the height; a step of forming irregularities on a surface of a material to be a die based on the depth F (x, y) to make the die; and a step of shaping a resin with respect to the irregularities of the die to form irregularities on a surface of the resin.

The irregularities in the step of die making may be formed by means of a laser.

The die may be an embossing die.

### Advantageous Effects of Invention

According to the present invention, it is possible to obtain a specific texture in the relationship between visual perception and tactile sensation, and to produce a decorative material having a different expression from that of the prior art.

### BRIEF DESCRIPTION OF DRAWINGS

FIG. 1 is a plan view of a decorative material 1.
FIG. 2 is a cross-sectional view of a portion of the decorative material 1.
FIG. 3 is a view showing a flow of a manufacturing method S10 of a decorative material.
FIG. 4 is a diagram showing a density distribution image 10.
FIG. 5 is a diagram illustrating a scene in which irregularities are formed on a die by a laser.
FIG. 6 is an enlarged view of a portion of a surface of a die 20.

### DETAILED DESCRIPTION OF EMBODIMENTS

Hereinafter, the embodiments will be described based on the drawings. However, the present invention is not limited to these embodiments. In the drawings shown below, the size and ratio of the members may be changed or exaggerated for clarity. Further, illustration of unnecessary portions for explanation and repeated reference numerals may be omitted so that the drawings are easy to see.

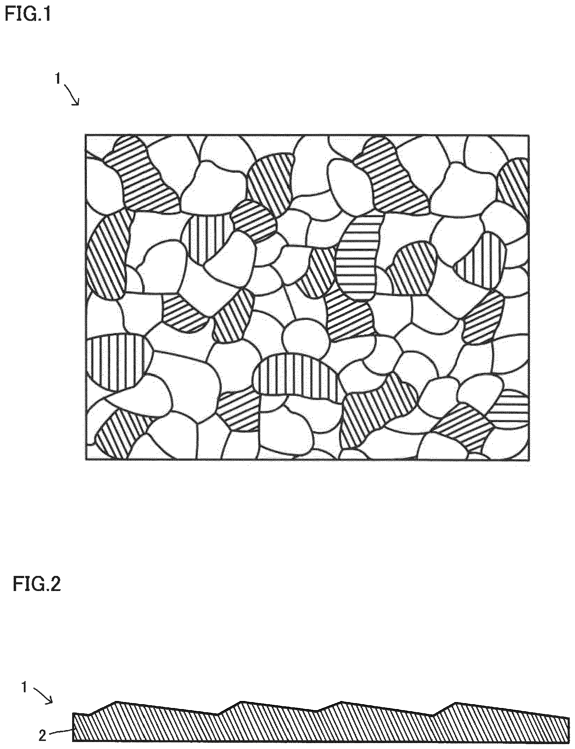

FIGs. 1 and 2 include a plan view (FIG. 1) of a decorative material 1 to be made as one example and a cross-sectional view (FIG. 2) of a portion thereof. As can be seen from these drawings, the decorative material 1 has a predetermined pattern by forming irregularities on the surface of the base material 2, which expresses a specific texture in terms of appearance and touch. Such a decorative material is not particularly limited, and for example, an interior material of a building such as a wall, a floor, a ceiling, or the like, an exterior material such as an exterior wall, a roof, a gate door, a wall, a fence, or the like, an exterior material such as a door, a window frame, a door frame, or the like, a surface material of a manufacturing member such as a surrounding edge, a width wood, a handrail, a surface material of a housing of a home electric appliance such as a television image receiver, a refrigerator, a surface material of a furniture such as a chest, a surface material of a container such as a box, a surface material of a container such as a resin bottle, an interior material or an exterior material such as a vehicle, an interior material or material or an exterior material of a ship, and the like can be used.

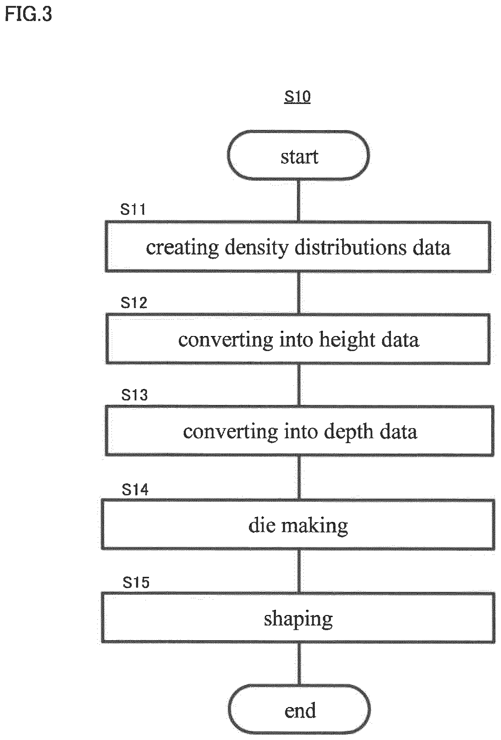

FIG. 3 shows a flow of a manufacturing method S10 of a decorative material according to one embodiment. As can be seen from FIG. 3, the manufacturing method S10 of a decorative material includes the steps of creating density distribution data S11, converting values into height data S12, converting values into depth data S13, die making S14, and shaping S15, to manufacture a decorating material. Hereinafter, each step will be described.

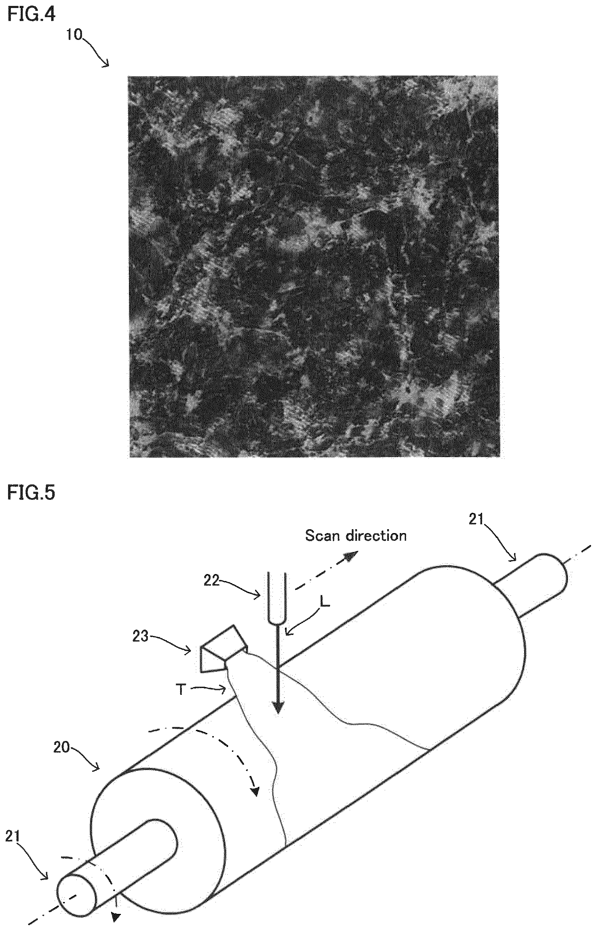

In the step of creating density distribution data S11 (hereinafter, it may be referred to as "step S11"), a density distribution image, which will be an origin of a pattern expressed on a surface of a decorative material, is acquired, and the image will be used as density distribution data. FIG. 4 exemplifies a density distribution image 10. Density distribution data are generated from such a density distribution image. The density distribution image 10 of this example is an image in which a pattern of a stone like texture is represented by density.

As the density distribution image acquired in the step S11, two-dimensional density patterns that do not have height information may be used. Such patterns include, for example, photographs, illustrations, and printed materials. Three-dimensional images having height information may be used, but in such a case, only information according to the density in the two dimensions in planar view, without the height information, can be used.

In the step S11, the density value D(x, y) is obtained for each set of two-dimensional coordinates (x, y) with respect to the obtained density distribution image, and is used as the density distribution data.

Although the two-dimensional coordinates (x, y) are not particularly limited, they can be made to correspond to the cylindrical coordinates (r, θ, z) of the surface of the die (in this embodiment, embossing die in the form of a metal roll) described later.

In addition, although there is no particular limitation on the specific expression of the density value D, for example, the darkest portion of the density distribution image is set to 255, and the lightest portion is set to 0, so that the density value can be expressed in 256 gradations by evenly allocating the density between them with integer.

As described above, a set of data of the density value D expressed in 256 gradations in each set of coordinates (x, y) is obtained, and this is taken as the density distribution data.

Digital data can thus be used as the density distribution data. Therefore, when the original density distribution image is not digital data, the image will be changed to digital data by reading and AD-converting two-dimensional images such as original documents themselves or photographs of the original documents with a scanner. When the pattern was originally designed using digital data with CAD, computer graphics, and the like, the digital data can be used.

Although there is no particular limitation on the means for generating the density distribution data, a graphic design drawing software "photoshop" manufactured by Adobe Systems Co., Ltd., can be used for example to generate the density distribution data of a resolution of 2,540 dpi with a density gradation of 8 bits (256 gradations) in a TIFF format.

In the step of converting values into height data S12 (hereinafter, it may be referred to as "step S12"), the density value D(x, y) of the density distribution data obtained in the step S11 is converted into a height H(x, y) for each set of coordinates (x, y) to obtain height data. This height data corresponds to the irregularities to be provided to the surface pattern of the decorative material. Therefore, the shape of the surface irregularity pattern of the decorative material is determined by this step.

Here, the conversion of the density value D(x, y) to the height H(x, y) is performed based on a predetermined rule. This makes the density distribution and the height distribution correspond to each other, and a specific texture based on the density distribution image can be obtained in the surface pattern of the decorative material.

For example, in the step S11, the darkest portion is set to a gradation 255 in the density distribution image, and in step S12, this is set to a height of 300 µm. On the other hand, in the step S11, the lightest portion in the density distribution image is set to a gradation 0, and in the step S12, this is set to a height of 0 µm. Then, for gradation 0 to 255 in the step S11, 0 µm to 300 µm is prorated to be assigned to the height in the step S12.

Therefore, according to this example, the lightest portion in the density distribution image becomes 0 µm height, and the higher the density becomes, the higher the height becomes, and the height becomes 300 µm in the darkest portion.

In the step of converting values into depth data (hereinafter, it may be referred to as "step S13"), the height H(x, y) for the irregularities of the decorative material to be produced, which is obtained in Step S12, is converted into a depth F(x, y) for producing a die corresponding to the height, to obtain depth data. That is, the depth F(x, y) is created so as to have an irregular pattern which is opposite to the irregularities by the height H(x, y) on the surface.

If irregularities are formed on the surface of the die by this depth data F(x, y), the irregularities on the surface of the decorative material to be shaped by this die will conform to the height data H(x, y).

In this embodiment, assuming a case in which the irregular shapes of the surface of an embossing die 20 are accurately shaped from the minimum depth portion to the maximum depth portion of the die onto the surface of a base material 2 to form an irregular pattern on a surface of a decorative material 1, the height H(x, y) was converted into the depth (x, y) so as to be opposite to the depth F(x, y) in the same scale. That is, if "height" is expressed as a positive and "depth" is expressed as a negative, F(x, y) = -H(x, y) is made. However, without being limited thereto, if necessary for expression, the height H(x, y) may be converted into the depth F(x, y) by multiplying it by a predetermined coefficient α. Thus, it may be converted at F(x, y) = αH(x, y). Here, α may be either a positive or negative.

With this, it is possible to manufacture a plurality of types of decorative materials which give different impressions from the same height data, only by changing α.

For example, when the thickness of the base material 2 after embossing (i.e., shaping) shrinks by 5% uniformly over the entire surface from the minimum depth portion to the maximum depth portion due to cooling, polymerization curing reaction and the like, and the irregular shapes on the surface of the embossing die 20 are all in contact with the surface of the base material 2 from the minimum depth portion to the maximum depth portion at the time when the die 20 is pressed against the surface of the base material 2, the plate depth of the embossing die 2 will be uniformly increased by 5% over the entire surface, in order to form a irregular pattern of the height distribution H(x, y) on the surface of the decorative material 1. That is, the coefficient α is set to 1.05.

In the step of die making S14 (hereinafter, it may be referred to as "step S14"), a die having irregularities on its surface is produced with depth data according to the depth F (x, y) obtained in the step S13. An embossing die in the form of a metal roll is shown here as one example. More specifically, the embossing die is produced as follows.

A metal roll 20 which eventually becomes an embossing die 20 as shown in FIG. 5 is prepared. The metal roll 20 is obtained by plating the surface of a hollow iron cylinder having a rotary drive shaft 21 at both axial ends with a copper layer. The surface of the metal roll 20 is roughened by polishing with a grinding wheel, which is a treatment to prevent a decrease in engraving efficiency due to specular reflection of the engraving laser beams.

As shown schematically in FIG. 5, with a laser beam direct engraving machine, the surface of the prepared metal roll 20 is engraved based on the depth F (x, y) for each set of coordinates (x, y), based on the depth data formed in the step S13. In this way, irregular shapes, which are opposite to the irregular shapes of the surface of the decorative material shown in FIG. 3 (the convex portion on the decorative material corresponds to the concave portion on the surface of the embossing die) and has the same shape in planar view as that of the irregular shapes of the surface of the decorative material, are formed on the surface of the roll.

The metal roll 20 is driven by an electric motor via its rotary drive shaft 21, and rotates with the rotary drive shaft 21 as a central axis. The entire surface of the metal roll 20 is scanned by a fiber laser beam L having an oscillation wavelength of 1,024 nm, a laser spot diameter of 10 µm, and an output power of 360 W emitted from a laser head 22. At that time, ON-OFF switching of the laser beam (switching of irradiation and non-irradiation) is performed for each set of the coordinates (x, y) according to the depth F(x, y) formed in the step S13, and a recess having a depth of 10 µm is formed at the irradiated portion by evaporation of the metal by one laser beam irradiation. The scanning on the metal roll surface by such a laser beam is repeated for ten 10 times. Further, in order to prevent the evaporated metal from remaining or adhering to the surface of the metal roll 20 as a powder, the laser beam irradiation is performed in a state of blowing an engraving liquid T from an engraving liquid discharge port 23 to a laser beam irradiation area of the surface of the metal roll 20.

At that time, for example, when the depth F (x₁, y₁) in the position (x₁, yi) is 50 µm, the laser beam irradiation is controlled such that the irradiation is performed only at the first five scans (ON), and controlled to be non-irradiate (OFF) for the remaining five scans in a total of ten scans.

Such scanning of the laser beam is completed, and desired irregular shapes are formed on the surface of the metal roll 20.

After the irregularities are engraved in this manner, the engraving liquid is washed, and then an electropolishing is performed to remove the residue of the metal adhering to the surface of the metal roll 20. Then, a chromium layer having a thickness of 10 µm is formed on the surface of the metal roll 20 by plating.

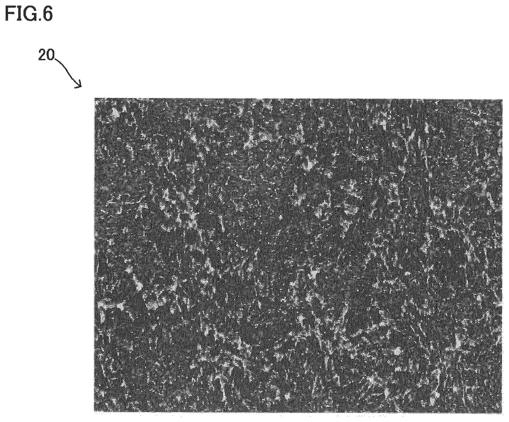

In this manner, it is possible to obtain the die 20 (a die for decorative material, in this embodiment, an embossing die) having irregular shapes which are opposite to the irregular shapes on the surface of the decorative material can be obtained on its surface. FIG. 6 shows an enlarged view of a portion of the embossing die 20 obtained in this manner.

In the step of shaping S15 (hereinafter, it may be referred to as "step S15"), embossing is performed on the base material 2 (see FIG. 2) to make the decorative material. Embossing may be performed with an appropriate known method, and there is no particular limitation. A typical method of embossing is as follows, for example.

The embossing die is pressed against a surface of an unsolidified resin base material to shape an irregular pattern of the embossing die surface on the surface of the base material. Then, the base material is solidified by cooling or light irradiation to fix the irregular pattern on the base material. Subsequently, the base material having the irregular pattern is released from the embossing die. The decorative material is made in this manner.

Here, various embossing methods will be further described, for example, as in the following methods (A) to (E).
(A) A resin sheet serving as the base material is heated and softened, and the embossing die is pressed to emboss the base material.
(B) By thermally fusing a resin sheet (base material) serving as a surface sheet and a resin sheet (second base material) serving as a base sheet by thermal pressure at the time of pressing the embossing die, embossing is performed by a double embossing method in which embossing and laminating are simultaneously performed.
(C) A resin sheet (base material) serving as a surface sheet is melt-extruded from a T-die and brought into contact with a cylinder-like embossing die doubling as a cooling roller to simultaneously perform formation of the surface sheet and embossing. At this time, a resin sheet (second base material) serving as a base sheet further inserted into the back side of the surface sheet is thermally fused so that the double embossing and film formation are simultaneously performed.
(D) As disclosed in JP S57-87318 A, JP H7-32476 A, and the like, an uncured liquid of an ionizing radiation curable resin is coated on the surface of a cylinder-like embossing die. Then, the uncured liquid is cured by irradiation of ionizing radiation, with a base sheet made of resin sheet or the like being further superposed thereon, whereby, a cured product is obtained. At that time, after the cured product is bonded to the base sheet, the product is released from the embossing die, to be a base material composed of the base sheet and the cured product on the base sheet, whereby, embossing into the base material is performed.
(E) An impregnated paper obtained by impregnating a paper such as titanium paper with an uncured product of a thermosetting resin such as a melamine resin is placed on a backing material such as a core paper or a wood plywood, and these layers are laminated and integrated by thermopress molding to form a thermosetting resin decorative material. At that time, by inserting an embossing die on the surface side of the impregnated paper, embossing is performed simultaneously with a thermal pressing on a surface of the decorative material formed by impregnating and curing the thermosetting resin.

It is noted that a thermoplastic resin is typically used as the material of the base material used in the embossing method of (A) to (C). Examples of the resin include polyolefin resins such as polyethylene, polypropylene, or olefin based thermoplastic elastomers and ionomers, acrylic resins such as polymethyl methacrylate and polybutyl methacrylate, thermoplastic polyester resins such as polyethylene terephthalate and polybutylene terephthalate, thermoplastic urethane resins, vinyl chloride resins, ABS resins (acrylonitrile-butadiene-styrene copolymers), styrene resins, and the like.

Typically, ionizing radiation-curable resins are used as the material of the base material used in the embossing method of (D). Examples thereof include ionizing radiation-curable resins which cure by ionizing radiation (ultraviolet rays, electron beams, and the like) the resins being radical polymerization type acrylate or cationic polymerization type epoxy resins.

Typically, thermosetting resins are used as the material of the base material used in the embossing method of (E). Examples thereof include thermosetting resins such as melamine resins, unsaturated polyester resins, and two-liquid curable urethane resins.

Although there is no particular limitation on the thickness of the base material, in the case of a sheet-like base material or a film-like base material, for example, a sheet-like or film-like base material having a thickness of about 20 µm to 1,000 µm , and in the case of a platelike base material, for example, one having a thickness of about 1 mm to20 mm is used.

The decorative material can be obtained in this manner. Since the decorative material obtained in this manner has a two-dimensional pattern which is an origin of the decorative material, expressed as irregularities corresponding to the pattern, it is possible to feel the relationship between the pattern and the irregularities and to obtain a specific texture in the relationship between visual perception and tactile sensation.

### References Sign List

- S10: manufacturing method of decorative material
- S11: creating density distributions data
- S12: converting into height data
- S13: converting into depth data
- S14: die making
- S15: shaping
- 1: decorative material
- 2: base material
- 10: density distribution image
- 20: die (embossing die, metal roll)
- 21: rotary drive shaft
- 22: laser head
- 23: engraving liquid discharge port

## Claims

1. A method for manufacturing a decorative material provided with an irregular pattern formed on its surface, the method comprising:
a step of creating density distribution data having a density value D(x, y) for each two-dimensional position (x, y);
a step of converting the density value D(x, y) into a height H(x, y) corresponding to how large the density value is;
a step of converting the height H(x, y) into a depth F(x, y) that corresponds to the height;
a step of forming irregularities on a surface of a material to be a die based on the depth F(x, y) to make the die; and
a step of shaping a resin with respect to the irregularities of the die to form irregularities on a surface of the resin.

2. The method for manufacturing a decorative material according to claim 1, wherein the irregularities in the step of die making is formed by means of a laser.

3. The method for manufacturing a decorative material according to claim 1 or 2, wherein the die is an embossing die.
